Europäisches Patentamt

European Patent Office

Office européen des brevets

(19)

(11) Veröffentlichungsnummer: **0 349 821 B1**

(12) **EUROPÄISCHE PATENTSCHRIFT**

(45) Veröffentlichungstag der Patentschrift: **27.04.94**

(51) Int. Cl.⁵: **B41F 13/02**, B65H 23/04, G01L 5/10

(21) Anmeldenummer: **89111146.0**

(22) Anmeldetag: **20.06.89**

(54) **Einrichtung zum Messen der Bahnspannung einer Warenbahn.**

(30) Priorität: **02.07.88 DE 3822486**

(43) Veröffentlichungstag der Anmeldung:
**10.01.90 Patentblatt 90/02**

(45) Bekanntmachung des Hinweises auf die
Patenterteilung:
**27.04.94 Patentblatt 94/17**

(84) Benannte Vertragsstaaten:
**CH DE FR GB IT LI SE**

(56) Entgegenhaltungen:
**WO-A-84/02121**
**DE-A- 3 609 623**
**DE-A- 3 623 208**
**GB-A- 2 096 777**
**US-A- 4 640 138**

(73) Patentinhaber: **Koenig & Bauer Aktiengesellschaft
Friedrich-Koenig-Strasse 4
D-97080 Würzburg(DE)**

(72) Erfinder: **Hauer, Horst-Walter
Leutfresserweg 10
D-8700 Würzburg(DE)**
Erfinder: **Hauer, Gerda Elisabeth
Leutfresserweg 10
D-8700 Würzburg(DE)**

Rank Xerox (UK) Business Services
(3.10/3.09/3.3.3)

EP 0 349 821 B1

# Beschreibung

Die Erfindung betrifft eine Einrichtung zum Messen einer Bahnspannung einer Warenbahn gemäß dem Oberbegriff des Patentanspruches 1.

Eine gattungsgemäße Vorrichtung zum Messen der Bahnspannung einer Warenbahn ist auch durch die DE-OS 36 09 623 bekannt. Die Meßwertaufnahme erfolgt mittels auf Biegebalken aufgebrachter Dehnungsmeßstreifen (DMS). Die Biegebalken sind jeweils auf beiden Lagerseiten einer Meßwalze diagonal zu einer Auflageplatte für die Meßwalze und einer maschinengestellfesten Grundplatte angeordnet. Die diagonale Anordnung der Biegebalken erfordert einen hohen Platzbedarf. Eine Umrüstung einer normalen Walze zu einer Meßwalze ist deshalb in den meisten Fällen nicht möglich. Die gezeigte Meßwalze ist außerdem nicht angetrieben.

Die GB 20 96 777 A zeigt in Fig. 3 eine Einrichtung zum Messen einer Belastung einer Lagerstelle in x- und y-Richtung mittels Dehungsmeßstreifen. Die Dehnungsmeßstreifen sind an vier Biegebalken angebracht. Je ein Ende der Biegebalken ist mit je einem Ring stoffschlüssig verbunden. Einer der Ringe weist eine Bohrung zur Aufnahme eines rotationssymetrischen Körpers auf.

Der Erfindung liegt die Aufgabe zugrunde, eine Einrichtung zu schaffen, mittels der Bahnspannungen an einer angetriebenen Walze gemessen werden können.

Die Aufgabe wird erfindungsgemäß durch den kennzeichnenden Teil des Patentanspruches 1 gelöst.

Die Vorteile der Erfindung bestehen darin, daß Zugkräfte sowohl in vertikaler als auch in horizontaler Richtung gemessen werden, wodurch eine Einbaulage und ein Walzenumschlingungswinkel beliebig sind. Eine Nachrüstung einer Walze mit der erfindungsgemäßen Meßeinrichtung ist leicht möglich, da die erfindungsgemäße Meßeinrichtung sehr wenig Platz in Anspruch nimmt und leicht ein- und ausbaubar ausgeführt ist, so daß Papierführungswalzen die teilweise von einer Papierbahn umschlungen werden, jederzeit als Meßwalze für eine Bahnspannung nachgerüstet werden können. Insbesondere ist es möglich die Meßeinrichtung an Fluid oder Gas durchströmten und/oder angetriebenen Walzen, z. B. Kühlwalzen, anzuordnen. Außerdem können die von einer angetriebenen Walze verursachten Bahnspannungen an der angetriebenen Walze gemessen werden.

Ein Ausführungsbeispiel ist in den Zeichnungen dargestellt und wird im folgenden beschrieben. Es zeigen:

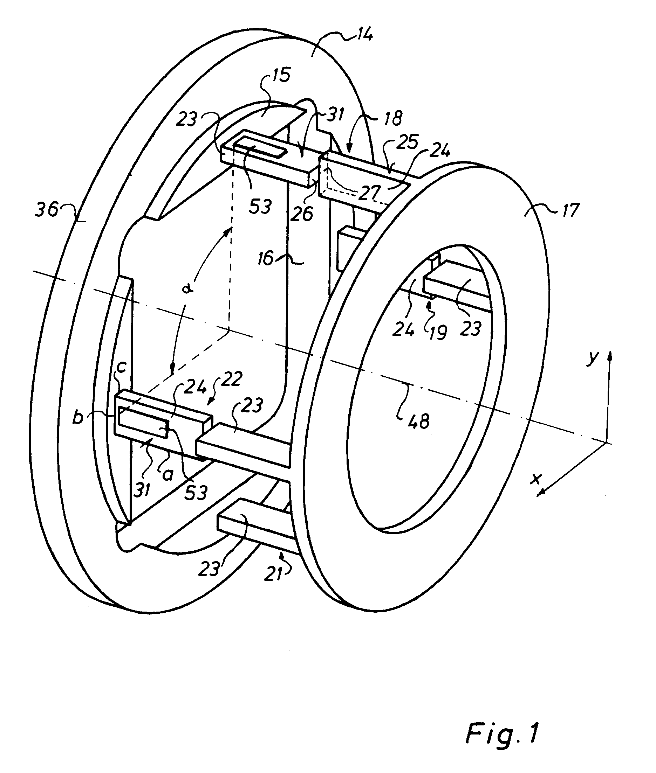

Fig. 1    einen erfindungsgemäßen Meßkäfig in perspektivischer Ansicht,

Fig. 2    eine Walzenzapfenlagerung mit Meßkäfig im Schnitt,

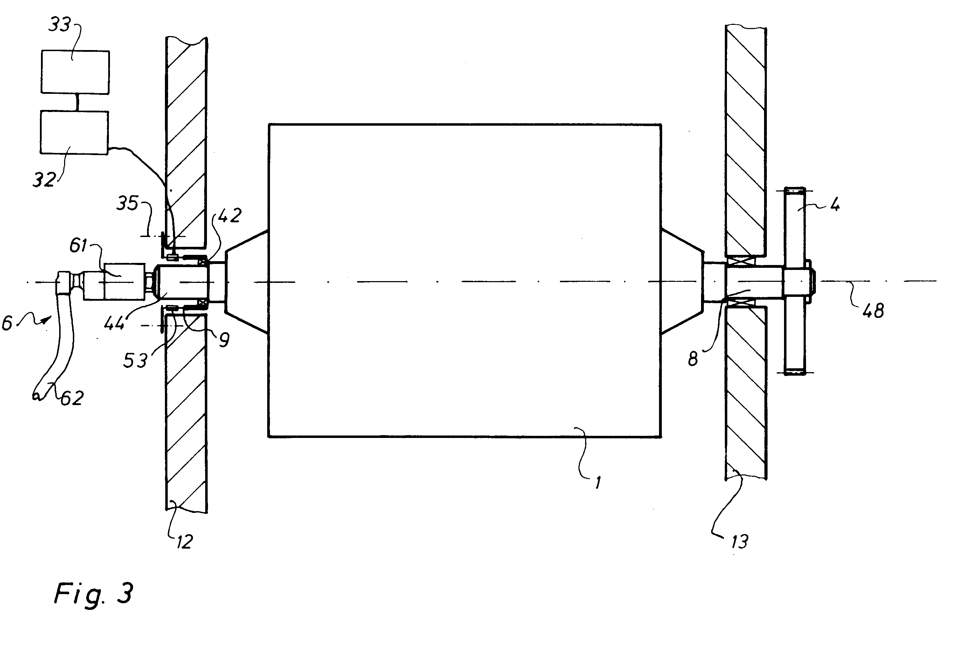

Fig. 3    eine schematische Darstellung der Meß- bzw. Kühlwalzenlagerung.

Ein Zylinder 1 einer Rollenrotationsdruckmaschine, z. B. eine als Meßwalze 1 ausgebildete angetriebene Kühlwalze ist in Verarbeitungsrichtung hinter den Druckeinheiten (nicht dargestellt) angeordnet. Die Meßwalze 1 ist mit einem Antrieb 4 und einer Kühlmittelzu-/-abfuhr 6 verbunden. Die Meßwalze 1 ist mittels ihres Lagerzapfens 7 auf der Loslagerseite in einer Aufnahme 9, im weiteren mit Meßkäfig bezeichnet, und auf der Festlagerseite mittels ihres Lagerzapfens 8 im Seitengestell 13 drehbar gelagert. Der Meßkäfig 9 ist am Seitengestell 12 der Rotationsdruckmaschine befestigt.

Der Meßkäfig 9 besteht aus einem kreisförmigen Flanschring 14 mit quadratischem Durchbruch 16 und einem parallel dazu angeordneten Aufnahmering 17. Der Flanschring 14 ist mittels achsparalleler Biegebalken (z. B. 4 Sück) 18, 19, 21, 22 mit dem Aufnahmering 17 verbunden. Der Flanschring 14 weist einen Absatz 15 zur Zentrierung des Meßkäfigs 9 in einer für den Einbau vorgesehenen Gestellbohrung 34 auf. Die Biegebalken 18, 19, 21, 22 sind so dimensioniert, daß sie eine federnde Auslenkung des Aufnahmerings 17 zum Flanschring 14 zulassen. Die Biegebalken 18, 19, 21, 22 sind einander diametral gegenüberliegend in einem Abstand $\alpha$ (90° im Bogenmaß) auf dem Absatz 15 angeordnet. Je nach Gewicht der Meßwalze 1, bzw. Steifigkeit oder Festigkeit der Biegebalken 18, 19, 21, 22 kann die Anzahl der Biegebalken auch kleiner sein, z. B. 1 oder 2. Die Querverbindungen 18, 19, 21, 22 sind untereinander gleich und bestehen jeweils aus zwei gleichen Quadern 23, 24.

Die Quader 23, 24 weisen jeweils unterschiedliche Kantenlänge $a > b > c$ auf und sind an ihrem einen, die Kantenlängen b, c aufweisenden Ende 26; 27 fest miteinander "über Kreuz" (um 90° versetzt) verbunden. Es ist selbstverständlich auch möglich die Quader 23, 24 jeweils mit einem quadratischen Querschnitt ($b = c$) auszubilden. Mit 23 sind die Quader bezeichnet, deren Grundfläche 31 mit den Kantenlängen a, b in y-Richtung weisen, so daß sie in der Lage sind, bei Krafteinwirkung in vertikaler Richtung (y-Richtung) durchzubiegen.

Mit 24 sind die Quader bezeichnet, deren Grundflächen 31 mit den Kantenlängen a, b in x-Richtung weisen, so daß diese in der Lage sind, bei Krafteinwirkung in horizontaler Richtung (x-Richtung) durchzubiegen.

Die Grundflächen 31 der mittels seiner Enden mit dem Absatz 15 des Flanschringes 14 verbundenen Quader 23, 24 weisen jeweils, bezogen auf eine Zylinderachse 48 in radialer Richtung. Demzufolge weisen die mit dem Aufnahmering 17 verbundenen Quader 24, 23 mit ihren Seitenflächen 35 bezogen auf die Zylinderachse 48 auch in radialer Richtung.

Der Flanschring 14 ist fest an das Seitengestell 12; 13 angeschraubt, so daß der Flanschring 14 bei Biegebeanspruchung eine feste Einspannstelle darstellt. Auf die, der Biegebeanspruchung unterliegenden, am Flanschring 14 angeordneten radial ausgerichteten Flächen 31 der Quader 23, 24 sind auf der Außen- und Innenseite Dehnungsmeßstreifen (DMS) 53, vorzugsweise in der Nähe des Flanschringes 14 (feste Einspannstelle), angeordnet. Zur Erreichung möglichst genauer Meßwerte ist der DMS-Meßwertaufnehmer als Vollbrückenschaltung mit vier aktiven DMS bei gleichzeitiger Temperaturkompensation angeordnet und geschaltet. Die DMS 53 sind mit geeigneten Auswerte-und Anzeigeeinrichtungen 32, 33 verbunden. Derartige DMS und Auswerteeinrichtungen sind bekannt (z. B. Hottinger Baldwin Meßtechnik) und werden deshalb nicht näher beschrieben.

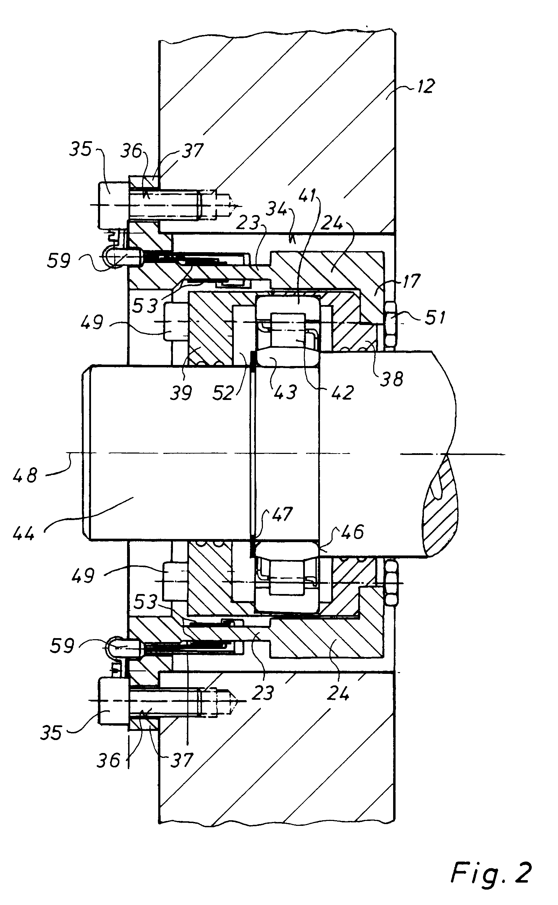

Wie in Fig. 2 gezeigt, ist der Meßkäfig 9 von außen freigängig in eine Bohrung 34 des Seitengestells 12 eingeführt und mittels Befestigungsschrauben 35, die durch Bohrungen 36 des Flanschringes 14 hindurchgehen an einer Außenseite des Seitengestells 12 festgeschraubt. Der Durchmesser der Bohrung 34 ist etwas größer als der Außendurchmesser des Aufnahmeringes 17, so daß eine für eine Messung notwendige Auslenkung des Aufnahmeringes 17 möglich ist. Der Meßkäfig 9 umgibt koaxial berührungsfrei eine aus Innenring 38 und Außenring 39 bestehende Lagerstelle für einen Lageraußenring 41 eines Zylinderrollenlagers 42. Ein Lagerinnenring 43 eines Zylinderrollenlagers 42 ist auf einem Lagerzapfen 44 der Meßwalze 1 in bekannter Weise mittels Wellenabsatz 46 und Sicherungsring 47 festgelegt. Der Außenring 39, der Innenring 38 und der Aufnahmering 17 sind mittels mehrerer am Umfang verteilter, axial zur Zylinderachse 48 angeordneter Befestigungsschrauben 49 miteinander verspannt und mittels Gegenmuttern 51 gesichert. Die Innen- und Außenringe 38, 39 liegen gegen Flüssigkeit abdichtend auf dem Lagerzapfen 44 auf und bilden mit diesem einen Schmierraum 52 für das eingeschlossene Zylinderrollenlager 42. Eine Schmiermittelzufuhr ist vorgesehen, jedoch nicht dargestellt.

Die Funktion der Meßvorrichtung ist wie folgt: Eine Änderung der Bahnspannung hat ebenfalls eine Änderung der auf die Meßwalze 1 wirkenden Kraft zur Folge. Diese Kraft wird über das Zylinderrollenlager 42 und den Innenring 38 auf den Aufnahmering 17 übertragen und resultiert in einer kleinen Auslenkung des Aufnahmeringes 17 gegenüber dem gestellfesten Flanschring 14, wodurch die Biegebalken 18, 19, 21, 22 durchbiegen. Die auf die Quader 23, 24 aufgebrachten DMS 53 werden verformt und geben in bekannter Weise über elektrische Leitungen 59 Signale an die Auswerte- und Anzeigeeinrichtungen 32, 33. Die Geschwindigkeit der Meßwalze 1 wird mittels des Antriebs 4, je nach Abweichung der Bahnspannung von einem vorgegebenen Sollwert manuell oder automatisch geregelt und somit eine vorgegebene Bahnspannung aufrechterhalten. Es wird gleichzeitig in x- und y-Richtung gemessen, um aus beiden Meßgrößen die Bahnspannung wahlweise vor oder nach der angetriebenen Meßwalze 1 bestimmen zu können. Die Bestimmung der jeweiligen Bahnspannung erfolgt durch additive Verknüpfung des x- und y-Signals, wobei mittels Auswertschaltung 32 jedes einzelne Signal von verschiedenen Parametern abhängig ist [z. B. Ein-/Ablaufwinkel, Abstand Lage Papierbahn zum Meßwertaufnehmer (DMS)].

In vorteilhafter Weise ist der Meßkäfig 9 auf der Loslagerseite, der Antrieb 4 auf der gegenüberliegenden Festlagerseite angeordnet, so daß möglicherweise auftretende Querkräfte z. B. durch schrägverzahnte Antriebsräder vom Festlager aufgefangen werden. Aus diesem Grund vereinfacht sich die Meßwertaufnahme auf eine Lagerseite. Es ist selbstverständlich auch möglich zur Erhöhung der Meßgenauigkeit die Meßwalze 1 beidseitig in Meßkäfigen 9 zu lagern. In diesem Fall muß der Antrieb jedoch über ein Kardangelenk mit entsprechendem Seitenkraftausgleich erfolgen.

Die Kühlmittelzufuhr 6 erfolgt auf der Loslagerseite mittels einer drehbaren Zwei-Weg-Einführung 61. Ein Zu-/abfuhrschlauch 62 ist elastisch ausgeführt, so daß von der Kühlmittelzu-/-abfuhr 6 keine Kräfte auf die Meßwalze 1, bzw. den Meßkäfig 9 ausgeübt werden.

Teileliste

| | |
|---|---|
| 1 | Meßwalze |
| 2 | - |
| 3 | - |
| 4 | Antrieb |
| 5 | - |
| 6 | Kühlmittelzu-/-abfuhr |
| 7 | Lagerzapfen |
| 8 | Lagerzapfen |
| 9 | Meßkäfig (Zugkraft-Meßgeber) |
| 10 | - |
| 11 | - |
| 12 | Seitengestell |
| 13 | Seitengestell |
| 14 | Flanschring |
| 15 | Absatz |
| 16 | Durchbruch |
| 17 | Aufnahmering |
| 18 | Biegebalken |
| 19 | Biegebalken |
| 20 | - |
| 21 | Biegebalken |
| 22 | Biegebalken |
| 23 | Quader |

24 Quader
25 -
26 Ende (23)
27 Ende (24)
28 -
29 -
30 Seitenfläche (23, 24)
31 Grundflächen
32 Auswerteinrichtung
33 Anzeigeeinrichtung
34 Gestellbohrung (12)
35 Befestigungsschraube
36 Bohrung
37 -
38 Innenring
39 Außenring
40 -
41 Lageraußenring
42 Zylinderrollenlager
43 Lagerinnenring
44 Lagerzapfen
45 -
46 Wellenabsatz
47 Sicherungsring
48 Zylinderachse
49 Befestigugnsschraube
50 -
51 Gegenmutter
52 Schmierraum
53 Dehnungsmeßstreifen DMS
54 -
55 -
56 -
57 -
58 -
59 elektr. Leitungen
60 -
61 Einführung
62 Kühlmittel zu-/abfuhr
α Abstand

## Patentansprüche

1. Einrichtung zum Messen einer Bahnspannung einer Warenbahn an einem zylinderförmigen rotierbaren Körper (1) mittels Dehnungsmeßstreifen (53), die an Biegebalken (18, 19, 21, 22) angebracht sind, dadurch gekennzeichnet, daß vier Biegebalken (18, 19, 21, 22) angeordnet sind, wobei die Biegebalken (18, 19, 21, 22) mit ihren Enden jeweils mit einem Flanschring (14) und einem Aufnahmering (17) formschlüssig verbunden sind und der Aufnahmering (17) eine Öffnung für eine Lagerstelle (38, 39, 41) für einen Zylinder (1) aufweist, daß der Flanschring (14) und der Aufnahmering (17) seitlich voneinander beabstandet angeordnet sind, daß die Biegebalken (18, 19, 21, 22) jeweils erste Quader (23) und zweite Quader (24) aufweisen, daß die ersten Quader (23) und zweiten Quader (24) jeweils unterschiedlich große Kantenlängen a > b > c aufweisen, daß die ersten Quader (23) jeweils "über Kreuz" zu den zweiten Quadern (24) angeordnet sind.

2. Einrichtung nach Anspruch 1, dadurch gekennzeichnet, daß der zylinderförmige Körper (1) als Meßwalze ausgeführt ist und einen Antrieb (4) aufweist.

3. Einrichtung nach den Ansprüchen 1 und 2, dadurch gekennzeichnet, daß der zylinderförmige Körper (1) eine Fluid- oder Gaszufuhr und -abfuhr (6) aufweist.

## Claims

1. Device for measuring a web tension of a material web on a cylindrical rotatable body (1) by means of expansion measuring strips (53) which are mounted on bending bars (18, 19, 21, 22), characterized in that four bending bars (18, 19, 21, 22) are arranged, the bending bars (18, 19, 21, 22) being connected by means of their ends in form fit manner in each case to a flange ring (14) and a receiving ring (17) and the receiving ring (17) having an opening for a bearing point (38, 39, 41) for a cylinder (1), in that the flange ring (14) and the receiving ring (17) are arranged to be laterally spaced from one another, in that the bending bars (18, 19, 21, 22) have in each case first cuboids (23) and second cuboids (24), in that the first cuboids (23) and second cuboids (24) each have edge lengths of different sizes a > b > c, and in that the first cuboids (23) are arranged in each case "crosswise" with respect to the second cuboids (24).

2. Device according to Claim 1, characterized in that the cylindrical body (1) is constructed as a measuring roller and has a drive (4).

3. Device according to Claims 1 and 2, characterized in that the cylindrical body (1) has a fluid or gas supply and removal means (6).

## Revendications

1. Dispositif de mesure de la tension d'une bande, sur un corps tournant (1) cylindrique, au moyen de jauges extensométriques (53), montées sur des poutres de flexion (18, 19, 21, 22), caractérisé en ce que quatre poutres de flexion (18, 19, 21, 22) sont disposées, les poutres de flexion (18, 19, 21, 22) étant reliées avec ajustement de forme chacune par leurs extrémités à un anneau de bride (14) et une bague support (17) et l'anneau support (17) présentant une ouverture pour un point de tourillonnement (38, 39, 41) destinée à un cylindre (1), en ce que l'anneau de bride (14) et l'anneau support (17) sont disposés à distance latérale l'un de l'autre, en ce les poutres de flexion (18, 19, 21, 22) présentent chacune des premiers cadres (23) et des deuxièmes cadres (24), en ce que les premiers cadres (23) et les deuxièmes cadres (24) présentent chacun des côtés de longueur différente, avec a > b > c, en ce que les premiers cadres (23) sont chacun disposés "en croix" par rapport aux deuxièmes cadres (24).

2.  Dispositif selon la revendication 1, caractérisé en ce que le corps cylindre (1) est réalisé sous forme de rouleau de mesure et présente un entraînement (4).

3.  Dispositif selon les revendications 1 et 2, caractérisé en ce que le corps cylindrique (1) présente une amenée et une évacuation (6) de fluide ou de gaz.

Fig.1

*Fig. 2*

Fig. 3

EP 0 349 821 B1